# EUROPEAN PATENT SPECIFICATION

(11) **EP 3 432 645 B1**
(45) Date of publication and mention of the grant of the patent: **02.10.2019**
(21) Application number: 17181899.0
(22) Date of filing: 18.07.2017
(51) Int. Cl.: H04W 48/02, H04W 28/02, H04W 4/00

(54) **A COMMUNICATION DEVICE FOR CONTROLLING TRANSMISSIONS OVER A COMMUNICATION NETWORK**
KOMMUNIKATIONSVORRICHTUNG ZUR STEUERUNG VON ÜBERTRAGUNGEN ÜBER EIN KOMMUNIKATIONSNETZWERK
UN DISPOSITIF DE COMMUNICATION POUR COMMANDER DES TRANSMISSIONS SUR UN RÉSEAU DE COMMUNICATION

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- WO-A1-2014/148990
- WO-A2-2012/093915
- GSM ASSOCIATION: "IoT Device Connection Efficiency Guidelines Version 3.0 30 March 2016", 3GPP DRAFT; TS.34 V3.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 September 2016 (2016-09-18), XP051145361, Retrieved from the Internet: URL:http://www.3gpp.org/ftp/Meetings_3GPP_ SYNC/CT/Docs/ [retrieved on 2016-09-18]
- NOKIA ET AL: "SMARTER UE/5G device", 3GPP DRAFT; S1-171430, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Jeju, South Korea; 20170213 - 20170217 20 February 2017 (2017-02-20), XP051240403, Retrieved from the Internet: URL:http://www.3gpp.org/ftp/tsg_sa/WG1_Ser v/TSGS1_77_Jeju/docs/ [retrieved on 2017-02-20]
- MEDIATEK INC: "Higher Data Rate for Rel-14 NB-IoT", 3GPP DRAFT; RP-161736 HIGHER DATA RATE FOR REL-14 NB-IOT V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. New Orleans, USA; 20160919 - 20160923 13 September 2016 (2016-09-13), XP051146925, Retrieved from the Internet: URL:http://www.3gpp.org/ftp/Meetings_3GPP_ SYNC/RAN/Docs/ [retrieved on 2016-09-13]

## Description

### TECHNICAL FIELD

In general, the invention relates to the field of wireless communication networks. More specifically, the invention relates to communication devices based on Low Power Wide Area (LPWA) technology, in particular Narrowband loT (NB loT) technology.

### TECHNICAL BACKGROUND

Narrowband loT (NB loT) is a new technology standard, designed to broaden the future of loT connectivity. Ratified by the 3GPP, NB loT is starting to be deployed by mobile network operators across the globe. NB loT is a Low Power Wide Area (LPWA) technology, developed to enable efficient communication for massively distributed communication devices across wide geographical areas and deep within urban infrastructure. NB loT technology is ideal for communication devices that generate low data traffic, rely on batteries and typically have a long life cycle. A battery life of more than 10 years may be supported for a wide range of use cases.

Moreover, NB loT technology significantly improves the system capacity and spectrum efficiency, especially in deep coverage. Thus, NB loT technology can be used to connect simple communication devices, such as sensors, to drive new data streams, reduce operational costs and create new business models. Smart meters, smart bins, environmental monitoring and precision agriculture are just a few exemplary applications of NB loT technology. Due to the limited hardware resources of communication devices based on LPWA technology and, in particular, NB loT technology, security mechanisms known, for instance, from smartphones may typically not be used for such communication devices. Thus, there is a need for improved communication devices based on LPWA technology, in particular NB loT technology.

In GSMA, TS.34, "loT Device Connection Efficiency Guidelines", Version 3.0, 30 March 2016, connection efficiency protection mechanisms within mobile networks are disclosed. A SIM application may detect an inefficient loT device behavior and may temporarily disable the network access credentials within the SIM; thus preventing the loT device from being able to connect to the network. Furthermore, operators may continuously monitor loT device behavior from within their networks and may temporarily disable the subscriptions associated with the loT devices.

In 3GPP, TSG-SA WG1 Meeting #77, S1-171430, "SMARTER - UE/5G device", 13-17 February 2017, resource efficiency requirements for 5G systems are disclosed. In particular, 5G systems shall optimize a resource use within the control plane and/or the user plane.

In WO 2012/093915 A2, a method for operating a Machine-To-Machine (M2M) Subscriber Station (SS) for a time-controlled service in an M2M communication system is disclosed. The method comprises stopping a data transmission during an access restriction time period when an access interruption message is received for an established service flow.

In WO 2014/148990 A1, a method for filtering uplink data based on a characteristic of a logical bearer is disclosed. The method comprises receiving a message comprising at least one barring parameter, and determining whether access for transmitting an uplink data packet over a radio interface is allowed.

In 3GPP TSG RAN #73, RP-161736, "Higher Data Rate for Rel-14 NB-loT", 19-23 September 2016, multiple HARQ process support for increasing the bitrate of NB-loT devices is disclosed.

### SUMMARY

It is an object of the invention to provide improved communication devices for communication within a communication network, in particular communication networks based on LPWA and/or NB loT technology.

The foregoing and other objects are achieved by the subject matter of the independent claims. Further implementation forms are apparent from the dependent claims, the description and the figures.

According to a first aspect, the invention relates to a communication device for communicating over a communication network, the communication device comprising:a communication interface configured to communicate over the communication network; an application processor configured to execute an application program, wherein the application processor is configured to communicate via the communication interface over the communication network; and a security enclave configured to authenticate the communication device within the communication network, wherein the security enclave is configured to communicate via the communication interface over the communication network, wherein the security enclave comprises:a control element configured to control transmissions of the communication interface, wherein the control element is configured to receive a restriction request signal indicating a restriction of the transmissions of the communication interface, and wherein the control element is configured to restrict the transmissions of the communication interface in response to the reception of the restriction request signal.

The control element may not restrict receptions of the communication interface, i.e. the communication interface may receive signals over the communication network regardless of any restrictions of the transmissions of the communication interface. Data to be transmitted via the communication interface may e.g. be queued or discarded during restriction of the transmissions of the communication interface.

In an implementation form, the restriction of the transmissions of the communication interface comprises a reduction of a transmission data rate of the communication interface.

In an implementation form, the restriction of the transmissions of the communication interface comprises a barring of the transmissions of the communication interface.

In an implementation form, the restriction request signal further indicates a restriction time duration for the restriction of the transmissions of the communication interface, wherein the control element is configured to restrict the transmissions of the communication interface during the restriction time duration in response to the reception of the restriction request signal. The restriction time duration may be predetermined or may be determined by a monitoring element during operation of the communication device.

In an implementation form, the communication device further comprises a monitoring element configured to monitor a transmission characteristic of the communication interface, to compare the transmission characteristic with a reference transmission characteristic, to generate the restriction request signal if the transmission characteristic exceeds the reference transmission characteristic, and to transmit the restriction request signal to the control element. The transmission characteristic may e.g. be a transmission data rate or a transmission data volume.

In an implementation form, the monitoring element is configured to determine the restriction time duration based on the transmission characteristic of the communication interface. The restriction time duration may e.g. depend on the difference between the transmission characteristic and the reference transmission characteristic.

In an implementation form, the communication interface is configured to communicate with a network management entity over the communication network, to receive the restriction request signal from the network management entity over the communication network, and to transmit the restriction request signal to the control element.

In an implementation form, the communication device further comprises a sensor configured to sense a physical parameter in a surrounding of the communication device, wherein the application processor is configured to process the physical parameter based on the application program. The physical parameter may e.g. be a temperature or an air pressure in the surrounding of the communication device.

The security enclave may hold or store network authentication credentials of the communication device for registering and/or authenticating the communication device within the communication network. The security enclave may further be configured to identify the communication device within the communication network.

According to a second aspect, the invention relates to a network management entity for monitoring a transmission characteristic of a communication device within a communication network. The network management entity comprises a monitoring element configured to monitor the transmission characteristic of the communication device, to compare the transmission characteristic with a reference transmission characteristic, to generate a restriction request signal if the transmission characteristic exceeds the reference transmission characteristic, wherein the restriction request signal indicates a restriction of the transmissions of the communication device, and a communication interface configured to transmit the restriction request signal to the communication device over the communication network. The monitoring element may monitor a plurality of transmission characteristics of a plurality of communication devices within the communication network.

The network management entity may e.g. be a server within the communication network. The network management entity may be associated with a mobile network operator (MNO).

In an implementation form, the monitoring element is configured to determine a restriction time duration for the restriction of the transmissions of the communication device, wherein the restriction request signal further indicates the restriction time duration. The restriction time duration may e.g. depend on the difference between the transmission characteristic and the reference transmission characteristic.

According to a third aspect, the invention relates to a communication system for communicating over a communication network. The communication system comprises a communication device according to the first aspect of the invention, and a network management entity according to the second aspect of the invention.

In an implementation form, the communication network is a Low Power Wide Area (LPWA) communication network, in particular a Narrowband loT (NB loT) communication network.

According to a fourth aspect, the invention relates to a method for operating a communication device for communicating over a communication network, wherein the communication device comprises a communication interface, an application processor, and a security enclave comprising control element, wherein the communication interface is configured to communicate over the communication network, wherein the application processor is configured to execute an application program, wherein the application processor is configured to communicate via the communication interface over the communication network, wherein the security enclave is configured to authenticate the communication device within the communication network, wherein the security enclave (603) is configured to communicate via the communication interfaceover the communication network, wherein the control element is configured to control transmissions of the communication interface. The method comprises receiving, by the control element, a restriction request signal indicating a restriction of the transmissions of the communication interface, and restricting, by the control element, the transmissions of the communication interface in response to the reception of the restriction request signal.

The method may be performed by the communication device. Further features of the method directly result from the features and/or the functionality of the communication device.

According to a fifth aspect, the invention relates to a method for operating a network management entity for monitoring a transmission characteristic of a communication device within a communication network, wherein the network management entity comprises a monitoring element, and a communication interface. The method comprises monitoring, by the monitoring element, the transmission characteristic of the communication device, comparing, by the monitoring element, the transmission characteristic with a reference transmission characteristic, generating, by the monitoring element, a restriction request signal if the transmission characteristic exceeds the reference transmission characteristic, wherein the restriction request signal indicates a restriction of the transmissions of the communication device, and transmitting, by the communication interface, the restriction request signal to the communication device over the communication network.

According to a sixth aspect, the invention relates to a computer program comprising a program code for performing the method according to the fourth aspect of the invention when executed on a communication device, or for performing the method according to the fifth aspect of the invention when executed on a network management entity.

The invention can be implemented in hardware and/or software.

### BRIEF DESCRIPTION OF THE FIGURES

Implementation forms of the invention will be described with respect to the following figures, in which:
Fig. 1 shows a schematic diagram of a communication device for communicating over a communication network;
Fig. 2 shows a schematic diagram of a network management entity for monitoring a transmission characteristic of a communication device within a communication network;
Fig. 3 shows a schematic diagram of a communication system for communicating over a communication network;
Fig. 4 shows a schematic diagram of a method for operating a communication device for communicating over a communication network;
Fig. 5 shows a schematic diagram of a method for operating a network management entity for monitoring a transmission characteristic of a communication device within a communication network;
Fig. 6 shows a schematic diagram of a communication system for communicating over a communication network;
Fig. 7 shows a schematic diagram of a communication device for communicating over a communication network; and
Fig. 8 shows a schematic diagram of a communication device for communicating over a communication network.

### DETAILED DESCRIPTION OF THE FIGURES

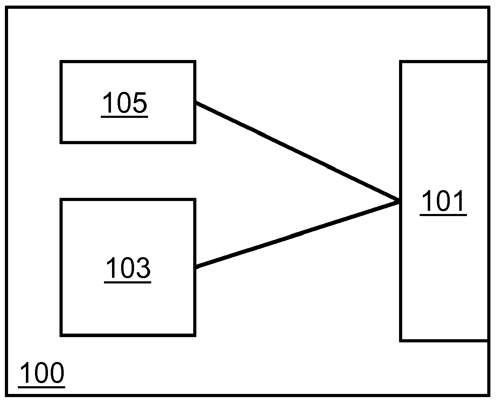

Fig. 1 shows a schematic diagram of a communication device 100 for communicating over a communication network. The communication device 100 comprises a communication interface 101 configured to communicate over the communication network, an application processor 103 configured to execute an application program, wherein the application processor 103 is configured to communicate via the communication interface 101 over the communication network, and a control element 105 configured to control transmissions of the communication interface 101, wherein the control element 105 is configured to receive a restriction request signal indicating a restriction of the transmissions of the communication interface 101, and wherein the control element 105 is configured to restrict the transmissions of the communication interface 101 in response to the reception of the restriction request signal. The communication device 100 may further comprise a monitoring element (not shown) configured to monitor a transmission characteristic of the communication interface 101, to compare the transmission characteristic with a reference transmission characteristic, to generate the restriction request signal if the transmission characteristic exceeds the reference transmission characteristic, and to transmit the restriction request signal to the control element 105. The restriction request signal may alternatively be provided by a network management entity over the communication network as described further below.

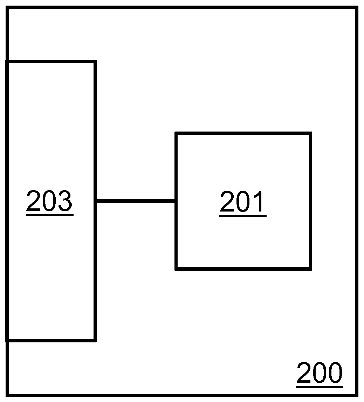

Fig. 2 shows a schematic diagram of a network management entity 200 for monitoring a transmission characteristic of a communication device within a communication network. The network management entity 200 comprises a monitoring element 201 configured to monitor the transmission characteristic of the communication device, to compare the transmission characteristic with a reference transmission characteristic, to generate a restriction request signal if the transmission characteristic exceeds the reference transmission characteristic, wherein the restriction request signal indicates a restriction of the transmissions of the communication device, and a communication interface 203 configured to transmit the restriction request signal to the communication device over the communication network.

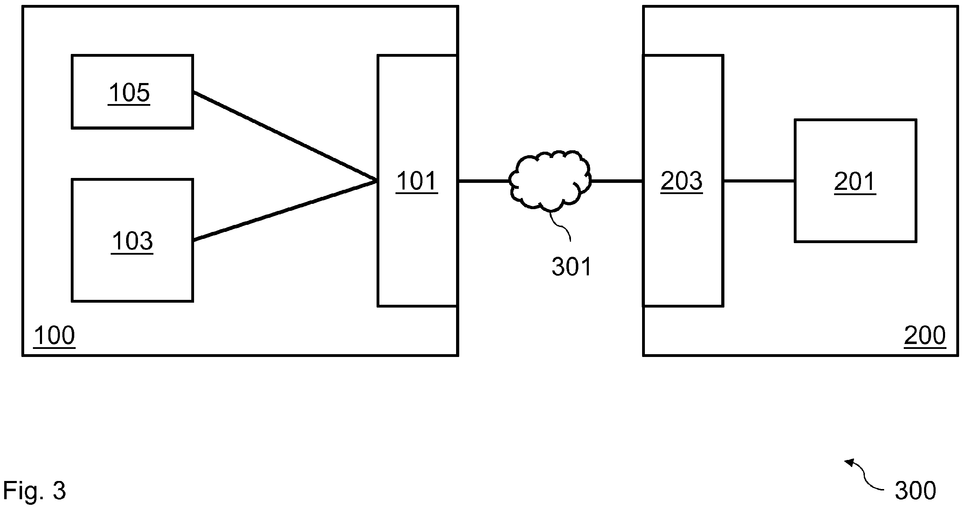

Fig. 3 shows a schematic diagram of a communication system 300 for communicating over a communication network 301. The communication system 300 comprises a communication device 100 and a network management entity 200.

The communication device 100 comprises a communication interface 101 configured to communicate over the communication network 301, and an application processor 103 configured to execute an application program, wherein the application processor 103 is configured to communicate via the communication interface 101 over the communication network 301. The communication device 100 further comprises a control element 105 configured to control transmissions of the communication interface 101.

The network management entity 200 comprises a monitoring element 201 configured to monitor a transmission characteristic of the communication device 100, in particular of the communication interface 101, to compare the transmission characteristic with a reference transmission characteristic, and to generate a restriction request signal if the transmission characteristic exceeds the reference transmission characteristic. The restriction request signal indicates a restriction of the transmissions of the communication interface 101 of the communication device 100. The network management entity 200 further comprises a communication interface 203 configured to transmit the restriction request signal to the communication device 100, in particular to the communication interface 101, over the communication network 301. The communication interface 101 may transmit or relay the restriction request signal to the control element 105.

The control element 105 is configured to receive the restriction request signal from the communication interface 101, and to restrict the transmissions of the communication interface 101 in response to the reception of the restriction request signal.

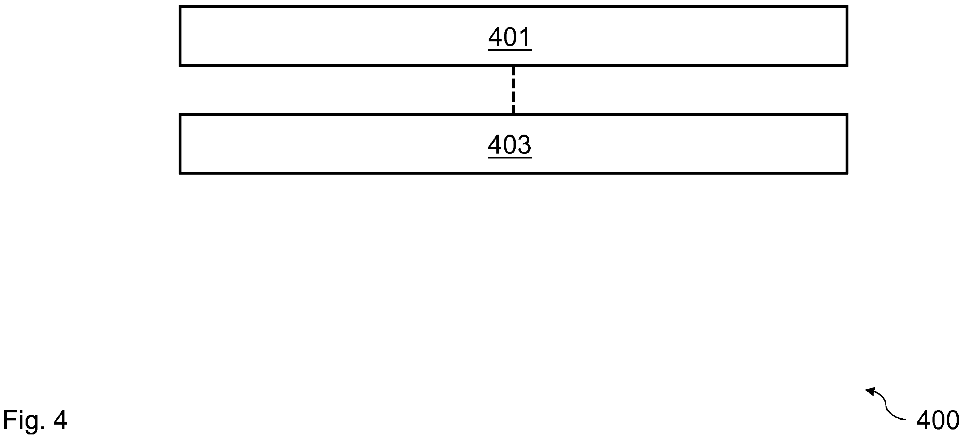

Fig. 4 shows a schematic diagram of a method 400 for operating a communication device for communicating over a communication network, wherein the communication device comprises a communication interface, an application processor, and a control element, wherein the communication interface is configured to communicate over the communication network, wherein the application processor is configured to execute an application program, wherein the application processor is configured to communicate via the communication interface over the communication network, wherein the control element is configured to control transmissions of the communication interface. The method 400 comprises receiving 401, by the control element, a restriction request signal indicating a restriction of the transmissions of the communication interface, and restricting 403, by the control element, the transmissions of the communication interface in response to the reception of the restriction request signal.

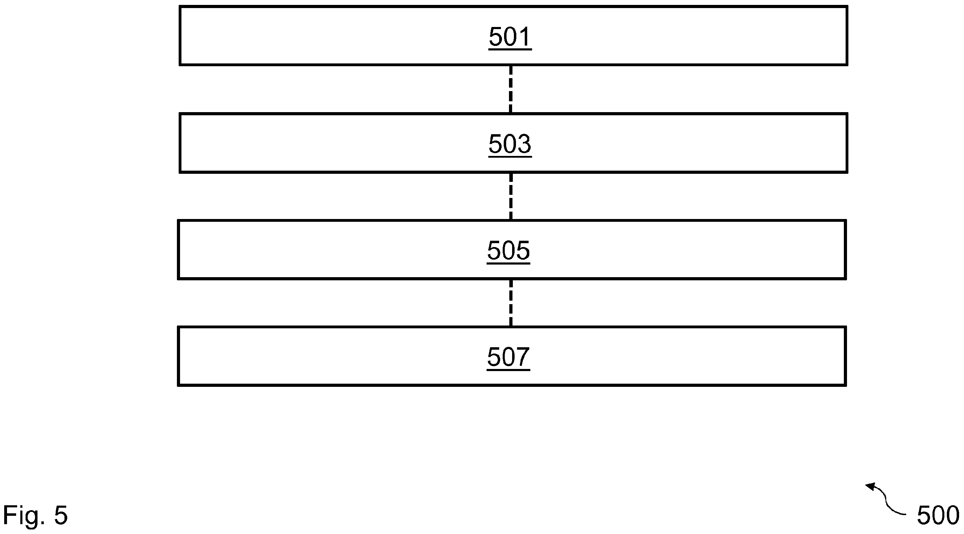

Fig. 5 shows a schematic diagram of a method 500 for operating a network management entity for monitoring a transmission characteristic of a communication device within a communication network, wherein the network management entity comprises a monitoring element, and a communication interface. The method 500 comprises monitoring 501, by the monitoring element, the transmission characteristic of the communication device, comparing 503, by the monitoring element, the transmission characteristic with a reference transmission characteristic, generating 505, by the monitoring element, a restriction request signal if the transmission characteristic exceeds the reference transmission characteristic, wherein the restriction request signal indicates a restriction of the transmissions of the communication device, and transmitting 507, by the communication interface, the restriction request signal to the communication device over the communication network.

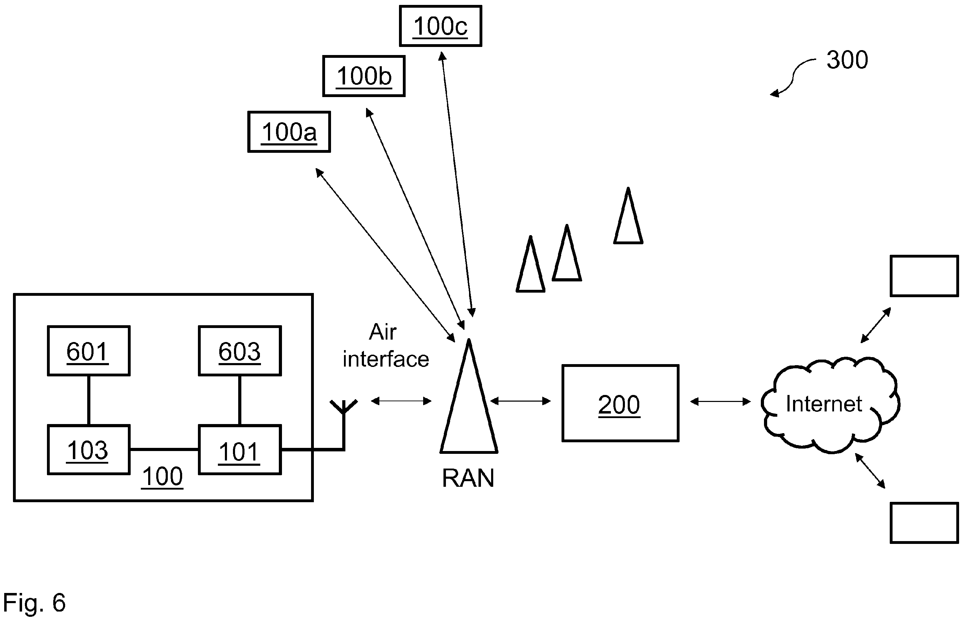

Fig. 6 shows a schematic diagram of a communication system 300 for communicating over a communication network. The communication system 300 comprises a plurality of communication devices 100, 100a, 100b, 100c, and a network management entity 200. The communication network may comprise a Radio Access Network (RAN) for wireless radio communications via an air interface between the plurality of communication devices 100, 100a, 100b, 100c, and the network management entity 200. The network management entity 200 may further communicate with a plurality of client servers, e.g. via the Internet.

The communication devices 100, 100a, 100b, 100c may have identical features. For simplicity, the following details are explained with regard to communication device 100 and apply accordingly to the respective further communication devices 100a, 100b, 100c.

The communication device 100 comprises a communication interface 101 configured to communicate over the communication network, and an application processor 103 configured to execute an application program, wherein the application processor 103 is configured to communicate via the communication interface 101 over the communication network. The communication device 100 further comprises a sensor 601 configured to sense a physical parameter in a surrounding of the communication device 100, wherein the application processor 103 is configured to process the physical parameter based on the application program. The communication device 100 further comprises a security enclave 603 configured to authenticate the communication device 100 within the communication network, wherein the security enclave 603 is configured to communicate via the communication interface 101 over the communication network. The communication device 100 further comprises a control element (not shown) configured to control transmissions of the communication interface 101.

The network management entity 200 comprises a monitoring element (not shown) configured to monitor a transmission characteristic of the communication device 100, in particular of the communication interface 101, to compare the transmission characteristic with a reference transmission characteristic, and to generate a restriction request signal if the transmission characteristic exceeds the reference transmission characteristic. The restriction request signal indicates a restriction of the transmissions of the communication interface 101 of the communication device 100. The network management entity 200 further comprises a communication interface (not shown) configured to transmit the restriction request signal to the communication device 100, in particular to the communication interface 101, over the communication network. The network management entity 200 may e.g. be arranged within a core network of a mobile network operator (MNO).

The control element of the communication device 100 is configured to receive the restriction request signal from the communication interface 101, and to restrict the transmissions of the communication interface 101 in response to the reception of the restriction request signal.

The concept allows e.g. for controlling and protecting the air interface when using LPWA technology and/or NB loT technology. NB loT relates to a mobile communication network, which is standardized by the 3GPP, and which has specifically been designed for the Internet-of-Things. One of the main differences and simplifications with regard to current mobile technologies can be seen in the low data rates, which are supported by NB loT (some 100Bit/s to 250 kbit/s). Since many applications in the field of the Internet-of-Things usually use low data volumes, this low data rate is usually sufficient. This behavior of the communication devices has been further defined by the 3GPP by a traffic model concerning the communication characteristics of the communication devices e.g. with regard to their frequency of communication and data volume. This traffic model usually forms the basis for the specification and design of the components of the communication devices using this technology. By using NB loT, an improved coverage and deep indoor penetration may be realized. By introducing extended discontinuous reception (eDRX) and a power save mode (PSM), long battery lifetimes of the communication devices are possible, e.g. up to 10 years corresponding to an equivalent of two AA-batteries.

Relevant for the quality and reliability of NB loT technology is the usage of a licensed radio spectrum of a mobile network operator. For NB loT, a narrow frequency range of 200 kHz is reserved. In this regard, reference is made to the inter-dependency with the traffic model. Only if the intended applications on average comply with the traffic model regarding their communication characteristics, the intended large number of communication devices may be operated within the communication network of the mobile network operator. The identification and/or authentication within the communication network may be realized by an international mobile subscriber identity (IMSI) in conjunction with a security enclave, e.g. a subscriber identity module (SIM). Exemplary applications for NB loT technology comprise smart metering heat, i.e. remote determining of a heat consumption, smart metering water, i.e. remote determining of a water consumption, and smart parking, i.e. determining used or unused parking lots.

Based on current specifications of the 3GPP, 50.000 to 100.000 communication devices may be supported within one cell. From a global perspective, the functionality of all communication devices within one cell may only be ensured, if the communication characteristics of the communication devices on average complies with conditions defined by the traffic model. However, erroneous behavior of a few communication devices, that do not comply with the traffic model, may substantially reduce the cell capacity on the air interface and may thus impede access of other communication devices. Such erroneous behavior may e.g. include a transmission of a large data volume in very short time intervals over a long time duration, e.g. a streaming of data. The erroneous behavior may e.g. be caused by an erroneous implementation of the communication device, an error within the communication device, or externally by a modification of an application program due to an attack by a hacker. Within the radio access network (RAN), a prioritization of communication devices may be performed. Furthermore, transmitted data may be discarded within the core network. However, a blocking of the air interface by an erroneous behavior of a communication device may usually not be prevented using these approaches.

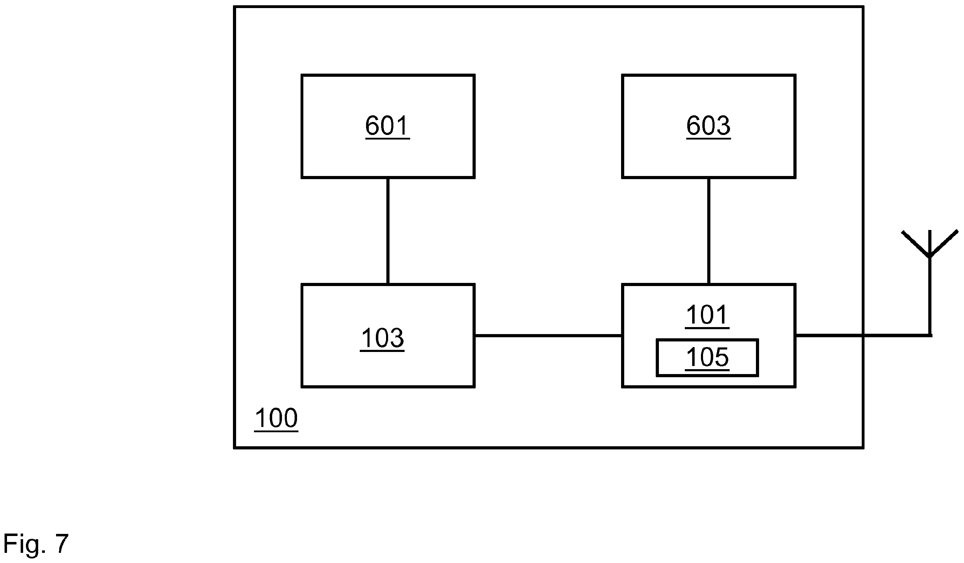

Fig. 7 shows a schematic diagram of a communication device 100 for communicating over a communication network. The communication device 100 comprises a communication interface 101 configured to communicate over the communication network. The communication device 100 further comprises an application processor 103 configured to execute an application program, wherein the application processor 103 is configured to communicate via the communication interface 101 over the communication network. The communication device 100 further comprises a sensor 601 configured to sense a physical parameter in a surrounding of the communication device 100, wherein the application processor 103 is configured to process the physical parameter based on the application program. The communication device 100 further comprises a security enclave 603 configured to authenticate the communication device 100 within the communication network, wherein the security enclave 603 is configured to communicate via the communication interface 101 over the communication network. The communication device 100 further comprises a control element 105 configured to control transmissions of the communication interface 101, wherein the control element 105 is configured to receive a restriction request signal indicating a restriction of the transmissions of the communication interface 101, and wherein the control element 105 is configured to restrict the transmissions of the communication interface 101 in response to the reception of the restriction request signal. The communication interface 101 comprises the control element 105.

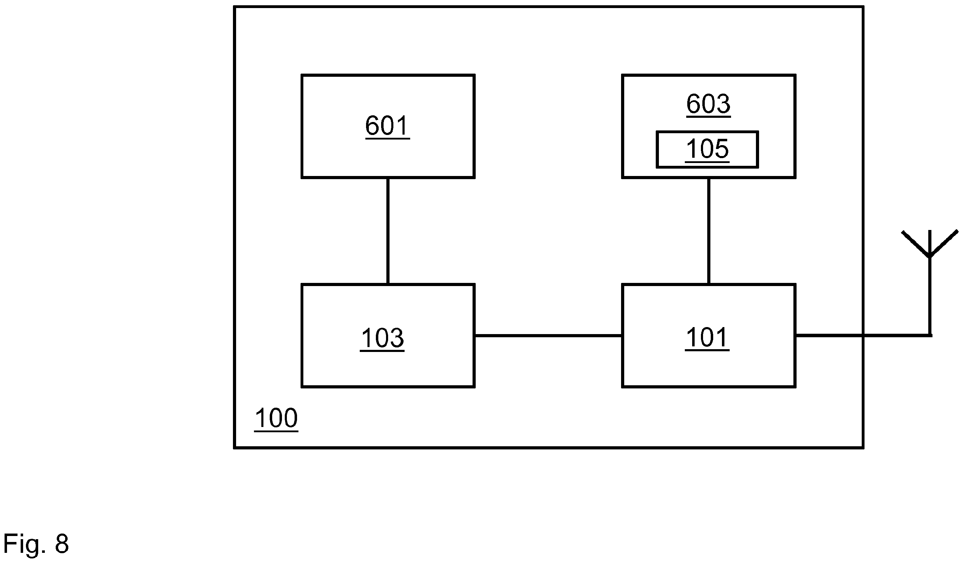

Fig. 8 shows a schematic diagram of a communication device 100 for communicating over a communication network. The communication device 100 comprises a communication interface 101 configured to communicate over the communication network. The communication device 100 further comprises an application processor 103 configured to execute an application program, wherein the application processor 103 is configured to communicate via the communication interface 101 over the communication network. The communication device 100 further comprises a sensor 601 configured to sense a physical parameter in a surrounding of the communication device 100, wherein the application processor 103 is configured to process the physical parameter based on the application program. The communication device 100 further comprises a security enclave 603 configured to authenticate the communication device 100 within the communication network, wherein the security enclave 603 is configured to communicate via the communication interface 101 over the communication network. The communication device 100 further comprises a control element 105 configured to control transmissions of the communication interface 101, wherein the control element 105 is configured to receive a restriction request signal indicating a restriction of the transmissions of the communication interface 101, and wherein the control element 105 is configured to restrict the transmissions of the communication interface 101 in response to the reception of the restriction request signal. The security enclave 603 comprises the control element 105.

By introducing the control element 105 for control or filtering purposes, the communications, in particular the transmissions, of the communication interface 101 may be controlled. In this regard, the control element 105 may restrict, in particular bar or deactivate, the transmissions of data of the communication interface 101 completely or during a restriction time duration. Receptions of data by the communication interface 101 remain possible.

The control element 105 may be regarded as a functional block, which may be deployed within a secured portion of the security enclave 603 or within the communication interface 101. The control element 105 may be independent from the application processor 103 or the application program executed by the application processor 103. The security enclave 603 may be an external subscriber identity module (SIM), an integrated subscriber identity module (SIM), a software-based subscriber identity module (SIM) or a virtual subscriber identity module (SIM). The security enclave 603 may e.g. be realized within or as part of a security system configured to operate one or more sets of logically separated security domains within the communication device 100. The security system may be configured to provide at least one security-related function of the communication device 100.

By implementing the control element 105 within the communication interface 101 or the security enclave 603, manipulations of the control element 105 by the application processor 103 or the application program executed by the application processor 103 may efficiently be mitigated or prevented. Attack on an application level may corrupt the application processor 103, or when using virtualization, an instance of the application program, but may not corrupt the communication interface 101 due to the physical and/or logical separation. A more effective protection may be realized by the physical and/or logical portion of the security enclave 603 due to the protected processing and storage.

For protecting the air interface, the control element 105 may be controlled by the network management entity 200 of a mobile network operator or of an authorized third party. The network management entity 200 within the core network may establish a logical connection to the control element 105 and may restrict the transmissions of the communication interface 101. Possible actions comprise a complete permanent barring of the transmissions, a restriction of the transmissions during a restriction time duration, or a reduction of a data rate of the transmissions during a restriction time duration.

By using the control element 105, it can be achieved that transmissions of the communication device 100 on the air interface may be barred or restricted, such that the resources of the air interface may be protected. Therefore, it can be ensured that other communication devices within the cell may still communicate during an erroneous or non-compliant behavior of a single communication device 100.

### REFERENCE SIGNS

- 100: Communication device
- 101: Communication interface
- 103: Application processor
- 105: Control element

- 200: Network management entity
- 201: Monitoring element
- 203: Communication interface

- 300: Communication system
- 301: Communication network

- 400: Method for operating a communication device
- 401: Receiving a restriction request signal
- 403: Restricting the transmissions of the communication interface

- 500: Method for operating a network management entity
- 501: Monitoring the transmission characteristic
- 503: Comparing the transmission characteristic
- 505: Generating a restriction request signal
- 507: Transmitting the restriction request signal

- 601: Sensor
- 603: Security enclave

## Claims

1. A communication device (100) for communicating over a communication network (301), the communication device (100) comprising:
a communication interface (101) configured to communicate over the communication network (301);
an application processor (103) configured to execute an application program, wherein the application processor (103) is configured to communicate via the communication interface (101) over the communication network (301); and
a security enclave (603) configured to authenticate the communication device (100) within the communication network (301), wherein the security enclave (603) is configured to communicate via the communication interface (101) over the communication network (301), wherein the security enclave (603) comprises:
a control element (105) configured to control transmissions of the communication interface (101), wherein the control element (105) is configured to receive a restriction request signal indicating a restriction of the transmissions of the communication interface (101), and wherein the control element (105) is configured to restrict the transmissions of the communication interface (101) in response to the reception of the restriction request signal.

2. The communication device (100) of claim 1, wherein the restriction of the transmissions of the communication interface (101) comprises a reduction of a transmission data rate of the communication interface (101), or wherein the restriction of the transmissions of the communication interface (101) comprises a barring of the transmissions of the communication interface (101).

3. The communication device (100) of any one of the preceding claims, wherein the restriction request signal further indicates a restriction time duration for the restriction of the transmissions of the communication interface (101), and wherein the control element (105) is configured to restrict the transmissions of the communication interface (101) during the restriction time duration in response to the reception of the restriction request signal.

4. The communication device (100) of any one of the preceding claims, further comprising:
a monitoring element configured to monitor a transmission characteristic of the communication interface (101), to compare the transmission characteristic with a reference transmission characteristic, to generate the restriction request signal if the transmission characteristic exceeds the reference transmission characteristic, and to transmit the restriction request signal to the control element (105).

5. The communication device (100) of any one of the claims 1 to 3, wherein the communication interface (101) is configured to communicate with a network management entity (200) over the communication network (301), to receive the restriction request signal from the network management entity (200) over the communication network (301), and to transmit the restriction request signal to the control element (105).

6. The communication device (100) of any one of the preceding claims, further comprising:
a sensor (601) configured to sense a physical parameter in a surrounding of the communication device (100), wherein the application processor (103) is configured to process the physical parameter based on the application program.

7. A network management entity (200) for monitoring a transmission characteristic of a communication device (100) within a communication network (301), the network management entity (200) comprising:
a monitoring element (201) configured to monitor the transmission characteristic of the communication device (100), to compare the transmission characteristic with a reference transmission characteristic, to generate a restriction request signal if the transmission characteristic exceeds the reference transmission characteristic, wherein the restriction request signal indicates a restriction of the transmissions of the communication device (100); and
a communication interface (203) configured to transmit the restriction request signal to the control element (105) comprised in the security enclave (603) of the communication device (100) over the communication network (301).

8. The network management entity (200) of claim 7, wherein the monitoring element (201) is configured to determine a restriction time duration for the restriction of the transmissions of the communication device (100), wherein the restriction request signal further indicates the restriction time duration.

9. A communication system (300) for communicating over a communication network (301), the communication system (300) comprising:
a communication device (100) of any one of the claims 1 to 6; and
a network management entity (200) of any one of the claims 7 or 8.

10. The communication system (300) of claim 9, wherein the communication network (301) is a Low Power Wide Area (LPWA) communication network, in particular a Narrowband loT (NB loT) communication network.

11. A method (400) for operating a communication device (100) for communicating over a communication network (301), wherein the communication device (100) comprises a communication interface (101), an application processor (103), and a security enclave (603) comprising a control element (105), wherein the communication interface (101) is configured to communicate over the communication network (301), wherein the application processor (103) is configured to execute an application program, wherein the application processor (103) is configured to communicate via the communication interface (101) over the communication network (301), wherein the security enclave (603) is configured to authenticate the communication device (100) within the communication network (301), wherein the security enclave (603) is configured to communicate via the communication interface (101) over the communication network (301), wherein the control element (105) is configured to control transmissions of the communication interface (101), the method (400) comprising:
receiving (401), by the control element (105), a restriction request signal indicating a restriction of the transmissions of the communication interface (101); and
restricting (403), by the control element (105), the transmissions of the communication interface (101) in response to the reception of the restriction request signal.

12. A method (500) for operating a network management entity (200) for monitoring a transmission characteristic of a communication device (100) within a communication network (301), wherein the network management entity (200) comprises a monitoring element (201), and a communication interface (203), the method (500) comprising:
monitoring (501), by the monitoring element (201), the transmission characteristic of the communication device (100);
comparing (503), by the monitoring element (201), the transmission characteristic with a reference transmission characteristic;
generating (505), by the monitoring element (201), a restriction request signal if the transmission characteristic exceeds the reference transmission characteristic, wherein the restriction request signal indicates a restriction of the transmissions of the communication device (100); and
transmitting (507), by the communication interface (203), the restriction request signal to the control element (105) comprised in the security enclave (603) of the communication device (100) over the communication network (301).

13. A computer program comprising a program code for performing the method (400) of claim 11 when executed on a communication device (100), or for performing the method (500) of claim 12 when executed on a network management entity (200).

## Patentansprüche

1. Kommunikationsvorrichtung (100) zum Kommunizieren über ein Kommunikationsnetzwerk (301), wobei die Kommunikationsvorrichtung (100) Folgendes umfasst:
eine Kommunikationsschnittstelle (101), die dazu ausgelegt ist, über das Kommunikationsnetzwerk (301) zu kommunizieren;
einen Anwendungsprozessor (103), der dazu ausgelegt ist, ein Anwendungsprogramm auszuführen, wobei der Anwendungsprozessor (103) dazu ausgelegt ist, via die Kommunikationsschnittstelle (101) über das Kommunikationsnetzwerk (301) zu kommunizieren; und
eine Sicherheitsenklave (603), die dazu ausgelegt ist, die Kommunikationsvorrichtung (100) im Kommunikationsnetzwerk (301) zu authentifizieren, wobei die Sicherheitsenklave (603) dazu ausgelegt ist, via die Kommunikationsschnittstelle (101) über das Kommunikationsnetzwerk (301) zu kommunizieren, wobei die Sicherheitsenklave (603) Folgendes umfasst:
ein Steuerelement (105), das dazu ausgelegt ist, Übertragungen der Kommunikationsschnittstelle (101) zu steuern, wobei das Steuerelement (105) dazu ausgelegt ist, ein Einschränkungsanforderungssignal, das eine Einschränkung der Übertragungen der Kommunikationsschnittstelle (101) anzeigt, zu empfangen, und wobei das Steuerelement (105) dazu ausgelegt ist, in Reaktion auf den Empfang des Einschränkungsanforderungssignals die Übertragungen der Kommunikationsschnittstelle (101) einzuschränken.

2. Kommunikationsvorrichtung (100) nach Anspruch 1, wobei die Einschränkung der Übertragungen der Kommunikationsschnittstelle (101) eine Reduzierung einer Übertragungsdatenrate der Kommunikationsschnittstelle (101) umfasst oder wobei die Einschränkung der Übertragungen der Kommunikationsschnittstelle (101) eine Blockierung der Übertragungen der Kommunikationsschnittstelle (101) umfasst.

3. Kommunikationsvorrichtung (100) nach einem der vorhergehenden Ansprüche, wobei das Einschränkungsanforderungssignal ferner eine Einschränkungszeitdauer für die Einschränkung der Übertragungen der Kommunikationsschnittstelle (101) anzeigt und wobei das Steuerelement (105) dazu ausgelegt ist, in Reaktion auf den Empfang des Einschränkungsanforderungssignals die Übertragungen der Kommunikationsschnittstelle (101) während der Einschränkungszeitdauer einzuschränken.

4. Kommunikationsvorrichtung (100) nach einem der vorhergehenden Ansprüche, die ferner Folgendes umfasst: ein Überwachungselement, das dazu ausgelegt ist, eine Übertragungseigenschaft der Kommunikationsschnittstelle (101) zu überwachen, die Übertragungseigenschaft mit einer Referenzübertragungseigenschaft zu vergleichen, das Einschränkungsanforderungssignal zu erzeugen, wenn die Übertragungseigenschaft die Referenzübertragungseigenschaft überschreitet, und das Einschränkungsanforderungssignal zum Steuerelement (105) zu übertragen.

5. Kommunikationsvorrichtung (100) nach einem der Ansprüche 1 bis 3, wobei die Kommunikationsschnittstelle (101) dazu ausgelegt ist, mit einer Netzwerkverwaltungsentität (200) über das Kommunikationsnetzwerk (301) zu kommunizieren, das Einschränkungsanforderungssignal über das Kommunikationsnetzwerk (301) von der Netzwerkverwaltungsentität (200) zu empfangen und das Einschränkungsanforderungssignal zum Steuerelement (105) zu übertragen.

6. Kommunikationsvorrichtung (100) nach einem der vorhergehenden Ansprüche, die ferner Folgendes umfasst: einen Sensor (601), der dazu ausgelegt ist, einen physischen Parameter in der Umgebung der Kommunikationsvorrichtung (100) zu erfassen, wobei der Anwendungsprozessor (103) dazu ausgelegt ist, den physischen Parameter auf Basis des Anwendungsprogramms zu verarbeiten.

7. Netzwerkverwaltungsentität (200) zum Überwachen einer Übertragungseigenschaft einer Kommunikationsvorrichtung (100) in einem Kommunikationsnetzwerk (301), wobei die Netzwerkverwaltungsentität (200) Folgendes umfasst:
ein Überwachungselement (201), das dazu ausgelegt ist, die Übertragungseigenschaft der Kommunikationsvorrichtung (100) zu überwachen, die Übertragungseigenschaft mit einer Referenzübertragungseigenschaft zu vergleichen, ein Einschränkungsanforderungssignal zu erzeugen, wenn die Übertragungseigenschaft die Referenzübertragungseigenschaft überschreitet, wobei das Einschränkungsanforderungssignal eine Einschränkung der Übertragungen der Kommunikationsvorrichtung (100) anzeigt; und
eine Kommunikationsschnittstelle (203), die dazu ausgelegt ist, das Einschränkungsanforderungssignal über das Kommunikationsnetzwerk (301) zum Steuerelement (105), das in der Sicherheitsenklave (603) der Kommunikationsvorrichtung (100) umfasst ist, zu übertragen.

8. Netzwerkverwaltungsentität (200) nach Anspruch 7, wobei das Überwachungselement (201) dazu ausgelegt ist, eine Einschränkungszeitdauer für die Einschränkung der Übertragungen der Kommunikationsvorrichtung (100) zu bestimmen, wobei das Einschränkungsanforderungssignal ferner die Einschränkungszeitdauer anzeigt.

9. Kommunikationssystem (300) zum Kommunizieren über ein Kommunikationsnetzwerk (301), wobei das Kommunikationssystem (300) Folgendes umfasst:
eine Kommunikationsvorrichtung (100) nach einem der Ansprüche 1 bis 6 und
eine Netzwerkverwaltungsentität (200) nach einem der Ansprüche 7 oder 8.

10. Kommunikationssystem (300) nach Anspruch 9, wobei das Kommunikationsnetzwerk (301) ein Niederleistungsweitbereichs(LPWA)-Kommunikationsnetzwerk ist, insbesondere ein Schmalband-IoT(NB IoT)-Kommunikationsnetzwerk.

11. Verfahren (400) zum Betreiben einer Kommunikationsvorrichtung (100) zum Kommunizieren über ein Kommunikationsnetzwerk (301), wobei die Kommunikationsvorrichtung (100) eine Kommunikationsschnittstelle (101), einen Anwendungsprozessor (103) und eine Sicherheitsenklave (603), die ein Steuerelement (105) umfasst, umfasst, wobei die Kommunikationsschnittstelle (101) dazu ausgelegt ist, über das Kommunikationsnetzwerk (301) zu kommunizieren, wobei der Anwendungsprozessor (103) dazu ausgelegt ist, ein Anwendungsprogramm auszuführen, wobei der Anwendungsprozessor (103) dazu ausgelegt ist, via die Kommunikationsschnittstelle (101) über das Kommunikationsnetzwerk (301) zu kommunizieren, wobei die Sicherheitsenklave (603) dazu ausgelegt ist, die Kommunikationsvorrichtung (100) im Kommunikationsnetzwerk (301) zu authentifizieren, wobei die Sicherheitsenklave (603) dazu ausgelegt ist, via die Kommunikationsschnittstelle (101) über das Kommunikationsnetzwerk (301) zu kommunizieren, wobei das Steuerelement (105) dazu ausgelegt ist, Übertragungen der Kommunikationsschnittstelle (101) zu steuern, wobei das Verfahren (400) Folgendes umfasst:
Empfangen (401) eines Einschränkungsanforderungssignals, das eine Einschränkung der Übertragungen der Kommunikationsschnittstelle (101) anzeigt, durch das Steuerelement (105) und
Einschränken (403) der Übertragungen der Kommunikationsschnittstelle (101) durch das Steuerelement (105) in Reaktion auf den Empfang des Einschränkungsanforderungssignals.

12. Verfahren (500) zum Betreiben einer Netzwerkverwaltungsentität (200) zum Überwachen einer Übertragungseigenschaft einer Kommunikationsvorrichtung (100) in einem Kommunikationsnetzwerk (301), wobei die Netzwerkverwaltungsentität (200) ein Überwachungselement (201) und eine Kommunikationsschnittstelle (203) umfasst, wobei das Verfahren (500) Folgendes umfasst:
Überwachen (501) der Übertragungseigenschaft der Kommunikationsvorrichtung (100) durch das Überwachungselement (201);
Vergleichen (503) der Übertragungseigenschaft mit einer Referenzübertragungseigenschaft durch das Überwachungselement (201);
Erzeugen (505) eines Einschränkungsanforderungssignals durch das Überwachungselement (201), wenn die Übertragungseigenschaft die Referenzübertragungseigenschaft überschreitet, wobei das Einschränkungsanforderungssignal eine Einschränkung der Übertragungen der Kommunikationsvorrichtung (100) anzeigt; und
Übertragen (507) des Einschränkungsanforderungssignals durch die Kommunikationsschnittstelle (203), über das Kommunikationsnetzwerk (301) zum Steuerelement (105), das in der Sicherheitsenklave (603) der Kommunikationsvorrichtung (100) umfasst ist.

13. Computerprogramm, das einen Programmcode zum Durchführen des Verfahrens (400) nach Anspruch 11, wenn er auf einer Kommunikationsvorrichtung (100) ausgeführt wird, oder zum Durchführen des Verfahrens (500) nach Anspruch 12, wenn er auf einer Netzwerkverwaltungsentität (200) ausgeführt wird, umfasst.

## Revendications

1. Dispositif de communication (100) pour la communication sur un réseau de communication (301), le dispositif de communication (100) comprenant :
une interface de communication (101) configurée pour communiquer au moyen du réseau de communication (301) ;
un processeur d'application (103) configuré pour exécuter un programme d'application, le processeur d'application (103) étant configuré pour communiquer par l'intermédiaire de l'interface de communication (101) au moyen du réseau de communication (301) ; et une enclave de sécurité (603) configurée pour authentifier le dispositif de communication (100) à l'intérieur du réseau de communication (301), l'enclave de sécurité (603) étant configurée pour communiquer par l'intermédiaire de l'interface de communication (101) au moyen du réseau de communication (301), l'enclave de sécurité (603) comprenant :
un élément de commande (105) configuré pour commander les émissions de l'interface de communication (101), l'élément de commande (105) étant configuré pour recevoir un signal de demande de restriction indiquant une restriction des émissions de l'interface de communication (101), et l'élément de commande (105) étant configuré pour restreindre les émissions de l'interface de communication (101) en réponse à la réception du signal de demande de restriction.

2. Dispositif de communication (100) selon la revendication 1, dans lequel la restriction des émissions de l'interface de communication (101) comprend une réduction d'un débit de données d'émission de l'interface de communication (101), ou dans lequel la restriction des émissions de l'interface de communication (101) comprend une interdiction des émissions de l'interface de communication (101).

3. Dispositif de communication (100) selon l'une quelconque des revendications précédentes, dans lequel le signal de demande de restriction indique également une durée de temps de restriction appliquée à la restriction des émissions de l'interface de communication (101), et dans lequel l'élément de commande (105) est configuré pour restreindre les émissions de l'interface de communication (101) au cours de la durée de temps de restriction en réponse à la réception du signal de demande de restriction.

4. Dispositif de communication (100) selon l'une quelconque des revendications précédentes, comprenant également :
un élément de surveillance configuré pour surveiller une caractéristique d'émission de l'interface de communication (101), pour comparer la caractéristique d'émission à une caractéristique d'émission de référence, pour générer le signal de demande de restriction si la caractéristique d'émission dépasse la caractéristique d'émission de référence, et pour envoyer le signal de demande de restriction à l'élément de commande (105).

5. Dispositif de communication (100) selon l'une quelconque des revendications 1 à 3, dans lequel l'interface de communication (101) est configurée pour communiquer avec une entité de gestion de réseau (200) au moyen du réseau de communication (301), pour recevoir le signal de demande de restriction provenant de l'entité de gestion de réseau (200) au moyen du réseau de communication (301), et pour envoyer le signal de demande de restriction à l'élément de commande (105).

6. Dispositif de communication (100) selon l'une quelconque des revendications précédentes, comprenant également :
un capteur (601) configuré pour détecter un paramètre physique dans l'environnement immédiat du dispositif de communication (100), le processeur d'application (103) étant configuré pour traiter le paramètre physique en fonction du programme d'application.

7. Entité de gestion de réseau (200) servant à surveiller une caractéristique d'émission d'un dispositif de communication (100) à l'intérieur d'un réseau de communication (301), l'entité de gestion de réseau (200) comprenant :
un élément de surveillance (201) configuré pour surveiller la caractéristique d'émission du dispositif de communication (100), pour comparer la caractéristique d'émission à une caractéristique d'émission de référence, pour générer le signal de demande de restriction si la caractéristique d'émission dépasse la caractéristique d'émission de référence, le signal de demande de restriction indiquant une restriction des émissions du dispositif de communication (100) ; et
une interface de communication (203) configurée pour envoyer le signal de demande de restriction à l'élément de commande (105) contenu dans l'enclave de sécurité (603) du dispositif de communication (100) au moyen du réseau de communication (301).

8. Entité de gestion de réseau (200) selon la revendication 7, dans laquelle l'élément de surveillance (201) est configuré pour déterminer une durée de temps de restriction appliquée à la restriction des émissions du dispositif de communication (100), le signal de demande de restriction indiquant également la durée de temps de restriction.

9. Système de communication (300) pour la communication sur un réseau de communication (301), le système de communication (300) comprenant :
un dispositif de communication (100) selon l'une quelconque des revendications 1 à 6 ; et
une entité de gestion de réseau (200) selon l'une quelconque des revendications 7 et 8.

10. Système de communication (300) selon la revendication 9, dans lequel le réseau de communication (301) est un réseau de communication étendu à basse puissance (LPWA), en particulier un réseau de communication IoT à bande étroite (NB IoT).

11. Procédé (400) d'utilisation d'un dispositif de communication (100) pour la communication sur un réseau de communication (301), le dispositif de communication (100) comprenant une interface de communication (101), un processeur d'application (103) et une enclave de sécurité (603) comprenant un élément de commande (105), l'interface de communication (101) étant configurée pour communiquer au moyen du réseau de communication (301), le processeur d'application (103) étant configuré pour exécuter un programme d'application, le processeur d'application (103) étant configuré pour communiquer par l'intermédiaire de l'interface de communication (101) au moyen du réseau de communication (301), l'enclave de sécurité (603) étant configurée pour authentifier le dispositif de communication (100) à l'intérieur du réseau de communication (301), l'enclave de sécurité (603) étant configurée pour communiquer par l'intermédiaire de l'interface de communication (101) au moyen du réseau de communication (301), l'élément de commande (105) étant configuré pour commander les émissions de l'interface de communication (101), le procédé (400) comprenant les étapes consistant à :
recevoir (401), par l'élément de commande (105), un signal de demande de restriction indiquant une restriction des émissions de l'interface de communication (101) ; et
restreindre (403), par l'élément de commande (105), les émissions de l'interface de communication (101) en réponse à la réception du signal de demande de restriction.

12. Procédé (500) d'utilisation d'une entité de gestion de réseau (200) servant à surveiller une caractéristique d'émission d'un dispositif de communication (100) à l'intérieur d'un réseau de communication (301), l'entité de gestion de réseau (200) comprenant un élément de surveillance (201) et une interface de communication (203), le procédé (500) comprenant les étapes consistant à :
surveiller (501), par l'élément de surveillance (201), la caractéristique d'émission du dispositif de communication (100) ;
comparer (503), par l'élément de surveillance (201), la caractéristique d'émission à une caractéristique d'émission de référence ;
générer (505), par l'élément de surveillance (201), un signal de demande de restriction si la caractéristique d'émission dépasse la caractéristique d'émission de référence, le signal de demande de restriction indiquant une restriction des émissions du dispositif de communication (100) ; et
envoyer (507), par l'interface de communication (203), le signal de demande de restriction à l'élément de commande (105) contenu dans l'enclave de sécurité (603) du dispositif de communication (100) au moyen du réseau de communication (301).

13. Programme informatique contenant un code de programme permettant de mettre en oeuvre le procédé (400) selon la revendication 11 lorsqu'il est exécuté sur un dispositif de communication (100) ou de mettre en oeuvre le procédé (500) selon la revendication 12 lorsqu'il est exécuté sur une entité de gestion de réseau (200).
